# EUROPÄISCHE PATENTSCHRIFT

(11) **EP 3 099 564 B1**
(45) Veröffentlichungstag und Bekanntmachung des Hinweises auf die Patenterteilung: **30.01.2019**
(21) Anmeldenummer: 15701806.0
(22) Anmeldetag: 30.01.2015
(51) Int. Cl.: B63B 21/16, B63B 21/66, B63H 1/10, B63B 35/68

(54) **WASSERFAHRZEUG, INSBESONDERE SCHLEPPER**
VESSEL, IN PARTICULAR A TUG
NAVIRE, EN PARTICULIER UN REMORQUEUR

(30) Priorität: 31.01.2014 DE 102014201745
(43) Veröffentlichungstag der Anmeldung: 07.12.2016
(73) Patentinhaber: Voith Patent GmbH, 89522 Heidenheim (DE)
(72) Erfinder: JÜRGENS, Dirk, 89522 Heidenheim (DE); PALM, Michael, 89522 Heidenheim (DE); SINGER, Sebastian, 89522 Heidenheim (DE)
(86) Internationale Anmeldenummer: PCT/EP2015/051906
(87) Internationale Veröffentlichungsnummer: WO 2015/114079

(56) Entgegenhaltungen:
- EP-A1- 0 176 189
- DE-T2- 60 019 304
- FR-A1- 2 682 474
- GB-A- 2 199 004
- KR-A- 20100 122 338
- KR-A- 20110 059 206

## Beschreibung

Die Erfindung betrifft ein Wasserfahrzeug, insbesondere einen Schlepper mit wenigstens einem Antrieb, wenigstens einer Trosse zum Herstellen einer Zugverbindung zwischen einem Transportschiff und dem Schlepper.

Schlepper zum Assistieren von Transportschiffen sind in unterschiedlichsten Ausführungen vorbekannt. Dabei handelt es sich insbesondere um Schlepper mit steuerbaren Antrieben. Als Antriebe werden beispielsweise Zykloidalpropeller vom Typus Voith-Schneider® oder Azimutpropeller eingesetzt. Andere Antriebsarten, wie herkömmliche Schiffsschrauben und Querruder sind ebenfalls denkbar. Derartige Schlepper dienen zum Manövrieren und zum Eskortieren von großen Transportschiffen, insbesondere Tankern. Dazu sind die Schlepper mit dem Transportschiff über eine Trosse verbunden. Das eine Ende der Trosse umschlingt dazu beispielsweise einen Poller, der sich am Transportschiff befindet. Das andere Ende umschlingt eine Winde, die sich meist am Heck des Schleppers befindet. Unter einer Trosse wird dabei insbesondere ein Tau aus Stahlseil, Pflanzenfasern oder synthetischem Material verstanden.

Zum Assistieren spielt der Trossenzug, d.h. die über die Trosse übertragbare Leinenkraft eine große Rolle. Er soll möglichst gleichmäßig sein, und zwar ungeachtet der Positionen von Schlepper und Transportschiff relativ zueinander, so wie bei Fahrt voraus und bei Fahrt zurück. Die auf die Trosse einwirkenden Kräfte sind gewaltig und können beim Manövrieren sowie beim Eskortieren stark variieren. Dabei wird der Trossenzug wird nicht allein von jenen Kräften bestimmt, die durch den Antrieb des Schleppers aufgebracht werden. Vielmehr hängt der Trossenzug auch von den Umgebungsbedingungen, insbesondere Wellengang ab. So kann bei hohem Wellengang der Trossenzug auf das Doppelte des Wertes ansteigen, der normalerweise bei der Arbeit des Schleppers auftritt. Solche Spannungsspitzen sind hoch gefährlich und können zu Schäden führen, beispielsweise zum Herausreißen des Pollers am Transportschiff oder der Winde am Schlepper.

Zur Vermeidung derartiger Spannungsspitzen in der Trosse werden sogenannte Eskort-Winden verwendet. Diese haben eine spannungsdämpfende Wirkung. Der Nachteil besteht in dem sehr komplexem Aufbau und erheblichen Mehrkosten gegenüber einer gewöhnlichen Winde. Dabei ist der Abbau von Spannungsspitzen auch hiermit nicht optimal. Bei entsprechend hohen Wellen können immer noch hohe Belastungen auf die an der Zugverbindung beteiligten Bauteile am Transportschiff und am Schlepper einwirken, sodass diese Bauteile zusätzlich entsprechend stark dimensioniert werden müssen.

Gemäß einer in EP 0176 189 A1 beschriebenen Ausführung, ist die Schleppeinrichtung eines Schleppers ausgebildet, das Krängmoment am Schlepper, das sich aus einem Querzug an einer von der Schleppeinrichtung ausgehenden Schleppleine ergibt, zu reduzieren. Zu diesem Zweck ist der Schlepparm am Schlepper so montiert, dass er durch einen kraftbetätigten Antriebsmechanismus innerhalb eines begrenzten Winkelbereichs nach oben und nach unten schwingbar ist und Mittel zum Halten in jeder Position, in die er geschwungen wird, aufweist. Die Druckschrift KR 2010 0122338 A offenbart ein Kippalarmverfahren für einen Schlepper.

Der Erfindung liegt daher die Aufgabe zugrunde, das genannte Problem der Spannungsspitzen zu minimieren oder zu beseitigen, ohne dass es des Einsatzes teurer Eskort-Winden und einer Überdimensionierung der an Zugverbindung beteiligten Bauteile bedarf.

Diese Aufgabe wird erfindungsgemäß durch die Merkmale gemäß Anspruch 1 und 10 gelöst. Vorteilhafte Ausgestaltungen sind in den Unteransprüchen beschrieben. Ein erfindungsgemäß ausgeführtes Wasserfahrzeug, insbesondere Schlepper zum Assistieren von Transportschiffen, mit wenigstens einem Antrieb und wenigstens einer Trosse zum Herstellen einer Zugverbindung zwischen einem Transportschiff und dem Schlepper ist durch die folgenden Merkmale gekennzeichnet:
- mit wenigstens einer Erfassungseinrichtung zum Erfassen zumindest einer, den Trossenzug wenigstens mittelbar charakterisierenden Größe;
- mit einer Steuer- und/oder Regelvorrichtung, die mit der Erfassungseinrichtung zum Erfassen zumindest einer den Trossenzug wenigstens mittelbar charakterisierenden Größe gekoppelt ist und die ausgelegt ist zum Bilden zumindest einer Stellgröße zu Ansteuerung zumindest einer Stelleinrichtung des wenigstens einen Antriebes zur Beeinflussung der Schubkraft und/oder der Schubrichtung des Schleppers.

In einer besonders bevorzugten Ausbildung umfasst ein solcher Schlepper dann
- eine Messeinrichtung zum Erfassen des Trossenzuges
- eine zentrale Prozesseinheit (CPU) zum Erfassen des Messergebnisses und zum Bilden und Weiterleiten eines Steuerbefehles bezüglich der Schubkraft und/oder Schubrichtung an den Antrieb.

Unter einer, eine bestimmte Größe wenigstens mittelbar beschreibenden Größe wird dabei entweder die Größe selbst verstanden oder aber eine in funktionalem oder anderem definierten Zusammenhang mit dieser stehende Größe. Eine direkte Erfassung der bestimmten Größen ist dann nicht zwingend erforderlich.

Ein Trossenzug beschreibt die in der Trosse bzw. Leine vorherrschende Kraft.

Die erfindungsgemäße Lösung bietet den Vorteil, durch aktives Anpassen der Orientierung und des Fahrverhaltens des Schleppers gegenüber dem Transportschiff schnell auf Änderungen in der Zugverbindung, welche zu kritischen Situationen führen können, zu reagieren und Änderungen schnell auszugleichen. Die teuren Eskort-Winden entfallen völlig oder wurden zumindest auf ganz geringe Leistungen minimiert. Die Kosten verringern sich entsprechend. Das erhebliche Gewicht einer Eskort-Winde entfällt oder wird minimiert.

In einer Ausbildung ist die Erfassungseinrichtung zur Erfassung zumindest einer den Trossenzug wenigstens mittelbar charakterisierenden Größe als eine Einrichtung zur Erfassung einer Größe aus der nachfolgenden Gruppe von Größen ausgebildet:
- Kraftsensor
- Drehmomentsensor
und im Bereich einer die Trosse führenden Trosseneinrichtung angeordnet.

Diese Lösung bietet den Vorteil auf ohnehin in der Trosseneinrichtung, insbesondere Winde vorhandene Erfassungs- bzw.- Messeinrichtungen zurückzugreifen und keinen zusätzlichen Aufwand für die Funktion in den Schlepper zu integrieren.

Der Schlepper ist vorzugsweise mit einer Sollwertvorgabeeinrichtung zur Vorgabe eines Sollwertes für einen einzustellenden Trossenzug. Die Steuer- und/oder Regelvorrichtung bildet oder umfasst eine Vergleichseinrichtung, ausgebildet zum Vergleich zwischen dem Sollwert und dem Istwert und einen Stellgrößenbildner, ausgebildet und ausgelegt zur Bildung einer Stellgröße zur Ansteuerung einer Stelleinrichtung des einzelnen Antriebes zur Änderung der Schubrichtung und/oder Schubkraft.

Sollwertvorgabeeinrichtung, Vergleichseinrichtung und Stellgrößenbildner sind hinsichtlich ihrer Ausbildung auf keine konkrete Ausführung beschränkt. Die Begriffe sind hier insbesondere hinsichtlich der auszuübenden Funktionen auszulegen. Die Funktionen können von eigenständigen Komponenten oder im Rahmen eines Programmes abgearbeitet werden.

Unter Stelleinrichtung des Antriebes wird insbesondere die einem Antriebstyp zugehörige Stelleinrichtung verstanden, da ein bestimmter Antriebstyp jeweils durch die diesem zugehörige Stelleinrichtung charakterisiert ist.
In einer besonders vorteilhaften Ausbildung wird der einzelne Antrieb von einem Zykloidalpropeller, besonders bevorzugt einem Voith-Schneider-Propeller gebildet, besonders bevorzugt weist der Schlepper zumindest zwei als Voith-Schneider-Propeller ausgebildete Antriebe auf.
Als mögliche Stelleinrichtungen fungieren beispielsweise die Stelleinrichtungen für die Ausrichtung der Propellerflügel.

Antriebskonzepte mit Voith-Schneider-Propellern sind besonders geeignet, den Istwert eines Trossenzuges dem gewünschten Sollwert schnell und mit geringem Aufwand nachzuführen. Dabei wird bei mehreren Antrieben vorzugsweise jeder Antrieb separat jedoch aufeinander abgestimmt angesteuert. Andere Ausführungen sind denkbar.

In einer besonders vorteilhaften Weiterentwicklung ist der Schlepper mit zumindest einer Erfassungseinrichtung zur Erfassung einer, eine Änderung des Trossenzuges bewirkende Umgebungsbedingung des Schleppers beschreibenden Größe, die mit der Steuer- und/oder Regelvorrichtung gekoppelt.
Die Erfassungseinrichtung zur Erfassung einer, eine Änderung des Trossenzuges bewirkende Umgebungsbedingung des Schleppers beschreibenden Größe kann dabei von einer Erfassungseinrichtung zur Erfassung einer die Bewegung des Schleppers beschreibenden Größe oder einer Erfassungseinrichtung zur Erfassung einer die Umgebungsbedingungen des Schleppers beschreibenden Größe gebildet werden. Im Einzelnen sind dazu folgende Ausbildungen denkbar:
- Rollwinkel-Erfassungseinrichtung
- Kurswinkel-Erfassungseinrichtung
- Kurswinkelgeschwindigkeit-Erfassungseinrichtung
- Kurswinkelbeschleunigung-Erfassungseinrichtung
- Rollwinkelbeschleunigung-Erfassungseinrichtung
- Stampfwinkel (Winkel um Querachse des Schiffes)
- Stampfwinkelbeschleunigung
- Wellenhöhen-Erfassungseinrichtung
- Wellenfrequenz-Erfassungseinrichtung
- Wellenrichtung-Erfassungseinrichtung.

Dabei kann auf einen Teil der ohnehin zur Antriebssteuerung erforderlichen Erfassungseinrichtungen zurückgegriffen werden.

Ferner ist in der Steuer- und/oder Regelvorrichtung eine Auswerteinrichtung vorgesehen, die aus den vorgenannten Größen das Änderungsverhalten des Istwertes des Trossenzuges über der Zeit unter dem Einfluss dieser Größen ableitet und einen für den Soll-Istwertvergleich bereitstellt, so dass nicht nur auf tatsächliche Änderungen reagiert sondert auch aktiv mit zeitlichem Versatz ansonsten auftretender Änderungen entgegengesteuert werden kann.

Ein erfindungsgemäßes Verfahren zur Regelung des Trossenzuges, insbesondere der Leinenkraft in der Zugverbindung zwischen einem Transportschiff und einem Schlepper zum Assistieren desselben, wobei der Schlepper zumindest einen Antrieb, eine Trosse zur Herstellung einer Zugverbindung zu dem Transportschiff und eine Steuer- und/oder Regelvorrichtung umfasst, ist dadurch gekennzeichnet, dass
gemäß einem ersten Regelungskonzept ein Istwert einer den Trossenzug in der Zugverbindung wenigstens mittelbar charakterisierenden Größe erfasst und bei Überschreiten eines vordefinierten Sollwertes und/oder bei Abweichung von einem vordefinierten Sollwert der zumindest eine Antrieb zur Beeinflussung der Schubkraft und/oder der Schubrichtung des Schleppers angesteuert wird und/oder
gemäß einem zweiten Regelungskonzept ein Istwert einer den Trossenzug in der Zugverbindung wenigstens mittelbar charakterisierenden Größe erfasst wird, eine mit zeitlichem Versatz auftretende Änderung des Istwertes ermittelt wird und bei Überschreiten eines vordefinierten Sollwertes und/oder bei Abweichung von einem vordefinierten Sollwert (Über- oder Unterschreitung) der zumindest eine Antrieb zur Beeinflussung der Schubkraft und/oder der Schubrichtung des Schleppers angesteuert wird.

Das erste Regelkonzept erlaubt eine aktive Anpassung durch zeitnahe Reaktion auf eine sich einstellende Abweichung zwischen Ist- und Sollwert. Das zweite Regelungskonzept bietet den Vorteil bereits im Vorfeld auf die sich mit zeitlichem Versatz einstellenden Änderungen zu reagieren und diese zu unterbinden oder zumindest die Änderung zu minimieren.

Beide Regelungskonzepte können dabei für sich allein verfolgt werden, d.h. es wird entweder nur das erste oder zweite Regelungskonzept zum Einsatz gelangen.

Besonders vorteilhaft gestaltet es sich jedoch, wenn das zweite Regelungskonzept mit dem ersten Regelungskonzept überlagert wird. In diesem Fall werden sowohl die äußeren Einflüsse, welche zu einer Änderung führen können als auch die im Einflussbereich der miteinander gekoppelten Wasserfahrzeuge liegenden Faktoren hinreichend berücksichtigt und eine stabile Einhaltung des gewünschten Sollwertes für den Trossenzug unter allen Umständen gewährleistet.

Für das zweite Regelungskonzept wird in einer vorteilhaften Weiterbildung zumindest eine der nachfolgend genannten Größen erfasst:
- eine, die Bewegung des Schleppers wenigstens mittelbar beschreibende Größe
- eine, die äußeren Umgebungsbedingungen des Schleppers wenigstens mittelbar beschreibende Größe,
wobei die mit zeitlichem Versatz auftretende Änderung des Istwertes für den Trossenzug als Funktion zumindest einer dieser Größen ermittelt wird oder aus dieser abgeleitet wird.

Als eine, die Bewegung des Schleppers wenigstens mittelbar beschreibende Größe wird vorzugsweise wenigstens eine Größe ausgewählt aus der nachfolgenden Gruppe von Größen erfasst:
- Rollwinkel
- Kurswinkel
- Kurswinkelgeschwindigkeit
- Kurswinkelbeschleunigung
- Rollwinkelbeschleunigung
- Stampfwinkel
- Stampfwinkelbeschleunigung

Bei den die Bewegung des Schleppers beschreibenden Größen handelt es sich um Größen, welche ohnehin für die Steuerung der Antriebe ermittelt werden und daher vorhanden sind, wodurch für die Regelung kein Zusatzaufwand erforderlich ist.

Als eine, die äußeren Umgebungsbedingungen des Schleppers wenigstens mittelbar beschreibende Größe wird wenigstens eine Größe ausgewählt aus der nachfolgenden Gruppe von Größen erfasst:
- Wellenhöhen
- Wellenfrequenz
- Wellenrichtung.

Vorzugsweise handelt es sich beim Antrieb um einen Zykloidalpropeller, am besten um einen Voith-Schneider-Propeller. Eine Winde wird zwar immer vorhanden sein, jedoch keine Eskort-Winde der genannten Art.

Aufgrund der hohen Flexibilität der Arbeitsweise eines solchen Antriebs kann auf plötzlich auftretende hohe Wellenkräfte schnell reagiert werden.

Die vorgenannten Möglichkeiten, bieten den Vorteil, mit zeitlichem Vorlauf Ereignisse oder Zustände zu erfassen, die sich in einer Änderung des Trossenzuges auswirken und diesen aktiv entgegen zu wirken. So können in besonders vorteilhafter Weise das Auftreten großer Wellen mit entsprechend hohen Kräften erfasst, und das Messergebnis an die CPU weiterleitet werden, die ihrerseits den Antrieb entsprechende Steuerbefehle erteilt. Der Steuerbefehl kann darin bestehen, die Schubkraft zurückzunehmen oder zu steigern, oder die Schubrichtung zu ändern mit dem Ziel, die Ausrichtung des Schleppers zu justieren, beispielsweise den Winkel alpha zu ändern. Dies ist der Winkel zwischen der Längsmittelachse des Schleppers und der Längsmittelachse des Transportschiffes, bzw. den Gierwinkel des Schleppschiffes.

In einer Weiterbildung wird der Istwert einer den Trossenzug in der Zugverbindung wenigstens mittelbar charakterisierenden Größe durch Erfassung zumindest einer der Größen ausgewählt aus der nachfolgenden Gruppe von Größen erfasst:
- Zugkraft beziehungsweise Leinenkraft
- Drehmoment an der Winde einer Trosseneinrichtung.

In besonders vorteilhafter Art und Weise erfolgt die Erfassung zumindest einer der nachfolgenden Größen
- des Istwertes einer den Trossenzug in der Zugverbindung wenigstens mittelbar charakterisierenden Größe ;
- einer, die Bewegung des Schleppers wenigstens mittelbar beschreibenden Größe
- einer, die äußeren Umgebungsbedingungen des Schleppers wenigstens mittelbar beschreibenden Größe,
fortlaufend.

Die fortlaufende Erfassung ermöglicht eine sehr schnelle Reaktionsfähigkeit. Denkbar ist jedoch auch alternativ die Erfassung in vordefinierten, vorzugsweise kurzen zeitlichen Intervallen.

Der Sollwert für die einzelnen Regelungskonzepte kann auf unterschiedliche Art vorgegeben werden. Denkbar ist beispielsweise den Sollwert als zulässigen Maximalwert für die Leinenkraft zu definieren, der nicht überschritten werden darf oder als einen vordefinierten zu erreichenden Mittelwert für die Leinenkraft. Dabei können in die einzelnen Regelungskonzepte zusätzliche Funktionen integriert werden, beispielsweise zulässige Toleranzbereiche etc.

Die einzelnen Regelungskonzepte werden vorzugsweise im Rahmen von Programmen bzw. Routinen in der Steuer- und/oder Regelungsvorrichtung abgearbeitet.

Die Erfindung ist anhand der Zeichnungen erläutert. Darin ist im Einzelnen folgendes dargestellt:
- Figur 1: zeigt beispielhaft eine Eskortsituation eines Schleppers mit einem Transportschiff;
- Figur 2a: verdeutlicht in schematisiert vereinfachter Darstellung die Grundkonfiguration einer Steuer- und/oder Regelvorrichtung;
- Figur 2b: verdeutlicht in schematisiert vereinfachter Darstellung die vorteilhafte Überlagerung von erstem und zweiten Regelkonzept;
- Figuren 3a und 3b: zeigen beispielhaft Ausführungen von Eskort-Schleppern mit steuerbaren Antrieben.

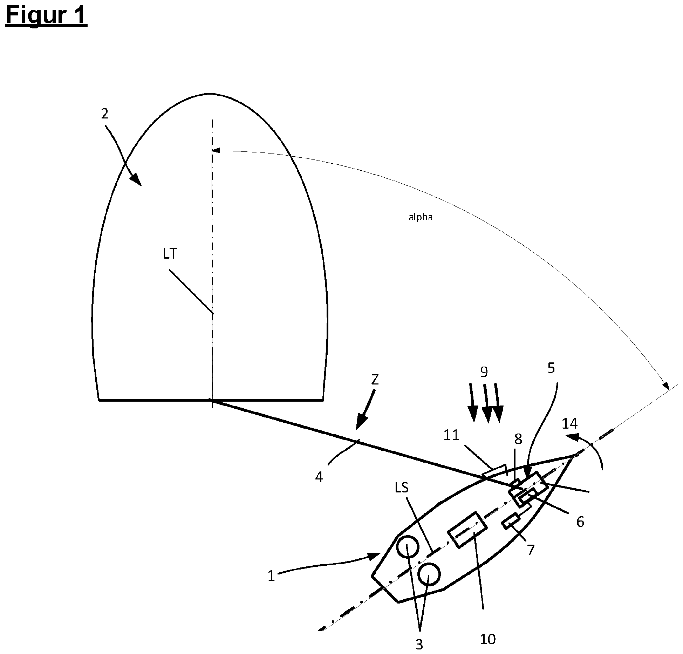

Die Figur 1 verdeutlicht in schematisiert vereinfachter Darstellung beispielhaft einen erfindungsgemäß ausgebildeten Schlepper 1 zum Assistieren beziehungsweise Eskortieren von Transportschiffen 2, beispielsweise ein Tankschiff. Die Umrisse der einzelnen Wasserfahrzeuge sind hier nur schematisch angedeutet. Der Schlepper 1 umfasst zumindest einen Antrieb 3, hier beispielhaft zwei Antriebe 3. Diese sind in einer besonders vorteilhaften Ausbildung als Voith-Schneider-Propeller ausgebildet und im dargestellten Fall symmetrisch bezüglich einer in Längsrichtung des Schleppers 1 verlaufenden Längsmittelachse LS angeordnet. Zum Assistieren ist eine Zugverbindung Z zwischen Schlepper 1 und Transportschiff 2 vorgesehen. Die Zugverbindung Z wird über eine Trosse 4 realisiert. Derartige Trossen 4 - auch als Schlepptrossen bezeichnet - sind am Schlepper 1 beispielsweise an Winden aufgerollt oder an Haken eingehängt. Der Schlepper 1 weist dazu im ersten Fall eine entsprechende Trosseneinrichtung 5 auf. Diese umfasst beispielhaft zumindest eine Winde und einen der Winde zugeordneten Antrieb.

Die über die Zugverbindung Z zwischen Schlepper 1 und Transportschiff 2 übertragbare Kraft ist durch das diese realisierende Verbindungselement, insbesondere die Trosse 4 charakterisiert. Die Trosse 4 selbst ist für eine bestimmte vordefinierte zu übertragende Kraft, die unabhängig vom gewählten Material der Trosse auch als Leinenkraft bezeichnet wird, ausgelegt. Der in der Zugverbindung Z vorliegende Trossenzug ist durch die maximal zulässige Leinenkraft und die maximal zulässige Belastung der Befestigungselemente, insbesondere Poller am Transportschiff 2 begrenzt. Daher erfolgt eine Sollwertvorgabe Xₛₒₗₗ für den in der Zugverbindung Z einzustellenden Trossenzug am Schlepper 1. Je nach Regelkonzept und Regelvariante kann der Sollwert gesetzt werden als ein zulässiger Maximalwert, welcher nicht überschritten werden darf und bei Überschreitung die Antriebe 3 derart angesteuert werden, dass der Sollwert eingestellt wird oder ein darunter liegender Wert. Gemäß einer zweiten Variante wird bei Abweichung (Über- oder Unterschreitung) des Istwertes Xᵢₛₜ vom Sollwert Xₛₒₗₗ der Antrieb oder die Antriebe 3 derart angesteuert, dass der Sollwert Xₛₒₗₗ eingestellt wird. Der Sollwert beschreibt und entspricht in diesem Fall vorzugsweise einem vordefinierten Mittelwert für die Leinenkraft.

Die Sollwertvorgabe für den Trossenzug Xₛₒₗₗ erfolgt vorzugsweise als Sollwertvorgabe direkt für die einzustellende bzw. aufzubringende Leinenkraft. Denkbar ist es auch, diese über eine, den Trossenzug wenigstens mittelbar charakterisierende Größe zu beschreiben. Derartige, den Trossenzug wenigstens mittelbar charakterisierende Größen stehen dabei in funktionalem oder direktem Zusammenhang mit dem Trossenzug.

Die Vorgabe für einen Sollwert Xₛₒₗₗ eines einzustellenden Trossenzuges bzw. einer einzustellenden Leinenkraft erfolgt beispielsweise über eine Sollwertvorgabeeinrichtung 7, die verschiedenartig ausgeführt sein kann.

An der Trosseneinrichtung 5 selbst wird bei einer Zugverbindungsanforderung über eine Stelleinrichtung 6 eine bestimmte Länge der Trosse 4 bereitgestellt. In Figur 1 sind Transportschiff 2 und der Schlepper 1 entsprechend zueinander positioniert. Die beiden Längsmittelachsen LS des Schleppers 1 und LT des Transportschiffes sind in der dargestellten Position in einem Winkel alpha zueinander ausgerichtet.
Der Winkel alpha entspricht in diesem Fall dem Gierwinkel des Schleppers 1.

Auf den Schlepper 1 wirken äußere Kräfte, insbesondere Wind- und Wellenkräfte erheblicher Größe ein, die ohne Gegenmaßnahmen den auf die Trosse 4 wirkenden Zug temporär massiv steigern würden. Dies wird erfindungsgemäß dadurch verhindert, dass der Schlepper 1 durch Einwirken auf die Antriebe 3, 3 im Sinne des Pfeiles 14 geschwenkt wird. Erfindungsgemäß wird dazu ein Istwert Xᵢₛₜ einer den Trossenzug wenigstens mittelbar charakterisierenden Größe vorzugsweise fortlaufend oder in vordefinierten Zeitintervallen erfasst und mit dem Sollwert Xₛₒₗₗ verglichen. Bei Abweichung des Istwertes Xᵢₛₜ vom Sollwert Xₛₒₗₗ wird zumindest eine Stelleinrichtung 13 des einzelnen Antriebes 3 angesteuert.
Dazu ist zumindest eine Erfassungseinrichtung 8 eines Istwertes Xᵢₛₜ einer den Trossenzug wenigstens mittelbar charakterisierenden Größe Xᵢₛₜ vorgesehen. Vorzugsweise erfolgt die Erfassung des Trossenzuges direkt und die Erfassungseinrichtung ist als Erfassungseinrichtung für die aktuell vorliegende Leinenkraft ausgebildet. Denkbar ist es auch, den Istwert der Leinenkraft nicht direkt sondern über die Erfassung von Istwerten anderer Größen zu bestimmen, die in direktem oder funktionalem Zusammenhang mit der Leinenkraft stehen, wobei aus diesen dann der Istwert Xᵢₛₜ gebildet wird.

Die Erfassungseinrichtung 8 ist vorzugsweise in oder an der Trosseneinrichtung 5 angeordnet. Im einfachsten Fall werden dabei ohnehin die zur Messung der Leinenkraft in der Winde vorgesehenen Einrichtungen genutzt.

Zum Vergleich des Istwertes Xᵢₛₜ mit dem Sollwert Xₛₒₗₗ und zur Ansteuerung der einzelnen Antriebe 3 ist die Steuer- und/oder Regelvorrichtung 10 derart ausgelegt und ausgebildet, dass diese die Funktionen des Vergleichens und der Bildung der Stellgröße ausführt. Diese umfasst beispielsweise eine Vergleichseinrichtung 12 und einen Stellgrößenbildner 15, welcher anhand der ermittelten Abweichung zwischen Soll- und Istwert ΔX die Stellgröße Y₃ zur Ansteuerung der Stelleinrichtung/Stelleinrichtungen 13 eines einzelnen Antriebes 3 bildet.

Gemäß der Grundkonfiguration der Regelung und damit einem ersten Regelungskonzept wird aktiv erst bei Vorliegen einer Abweichung ΔX nachgesteuert.

Gemäß einer besonders vorteilhaften Weiterbildung ist es jedoch vorgesehen, bereits vorausschauend auf die, die Leinenkraft beeinflussende Faktoren zu reagieren. Dazu werden für ein zweites, dem ersten Regelungskonzept vorzugsweise überlagertes Regelungskonzept, die auf ein Änderungsverhalten des Trossenzuges wirkende äußere Größen, insbesondere die Bewegung des Schleppers 1 wenigstens mittelbar beeinflussende äußere Größen, wie beispielsweise der Wellengang nach Höhe und/oder Richtung erfasst. Die, die Bewegung des Schleppers wenigstens mittelbar beeinflussenden äußeren Größen sind dabei Größen, ausgewählt aus der Gruppe nachfolgend genannter Größen:
- die Bewegung des Schleppers 1 direkt beschreibende Größen, wie beispielsweise zumindest eine der nachfolgend genannten Größen
- Rollwinkel
- Kurswinkel
- Kurswinkelgeschwindigkeit
- Kurswinkelbeschleunigung
- Rollwinkelbeschleunigung
- Stampfwinkel
- Stampfwinkelgeschwindigkeit
oder mit diesen in funktionalem oder direktem Zusammenhang stehende Größen, wie Wellenfrequenz, Wellenhöhe und Wellenrichtung. Diese werden als Eingangssignale der Steuer- und/oder Regelvorrichtung 10 zugeführt. In dieser wird aus diesen eine Stellgröße Y3 zur Ansteuerung des einzelnen Antriebes 3 gebildet. Bei diesen handelt es sich beispielsweise um eine Steigungsänderung der Propeller und/oder Drehzahlveränderung und/oder Azimutwinkeländerung.

Es versteht sich, dass es sich bei allen Eingangs- und Ausgangsgrößen um Signale handeln kann, die auf unterschiedliche Art und Weise übertragbar sind.
Die einzelnen Erfassungseinrichtungen 8 und 11 sind dazu mit der Steuer- und /oder Regelvorrichtung 10 kommunizierend gekoppelt. Die Kopplung kann direkt, d.h. über Leitungsverbindungen oder drahtlos erfolgen. Dies gilt in Analogie für die Stelleinrichtungen 13 und 6.

Als Erfassungseinrichtungen 8 und/oder 10 kommen beispielsweise Sensoren zum Einsatz. Als Erfassungseinrichtungen finden Beschleunigungssensoren und Wellenräder Verwendung.

Die Steuer- und/oder Regelvorrichtung 10 kann beispielsweise als zentrale Steuereinheit ausgeführt sein oder aber auch als dezentrales Steuergerät, wobei die einzelnen Komponenten über einen Bus miteinander gekoppelt sind. Dabei kann die Steuer- und/oder Regelvorrichtung 10 entweder nur für die Funktionen zur Einstellung eines Trossenzuges zum Einsatz gelangen und kann einer zentralen Steuer- und/oder Regelvorrichtung des Schleppers 1 untergeordnet oder zugeordnet sein. Im anderen Fall werden die Funktionen der Steuer- und/oder Regelvorrichtung 10 von der zentralen Steuer- und/oder Regelvorrichtung zur Steuerung des Schleppers 1 mit übernommen, d.h. die zentrale Steuer- und/oder Regelvorrichtung des Schleppers bildet die Steuer- und/oder Regelvorrichtung 10.

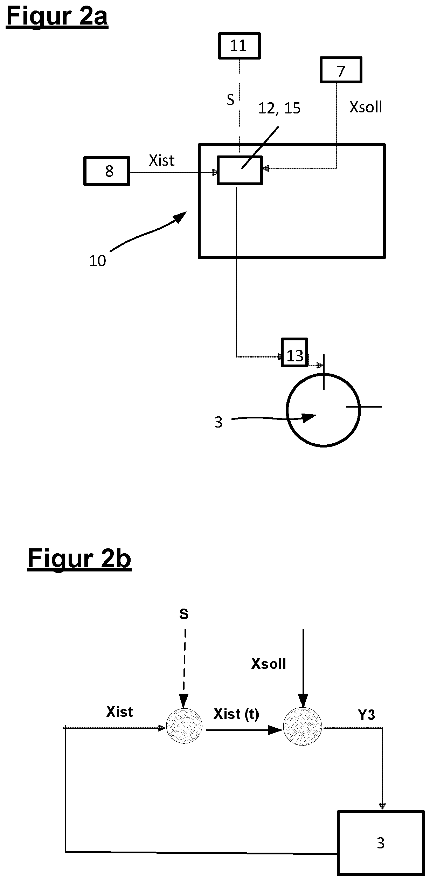

Die Figur 2a verdeutlicht in schematisiert vereinfachter Darstellung die Steuer- und/oder Regelvorrichtung 10 und die Ein- und Ausgangsgrößen sowie Kopplungen dieser mit den einzelnen Komponenten. Erkennbar ist die Erfassungseinrichtung 8 zur Erfassung zumindest einer, den Trossenzug wenigstens mittelbar charakterisierenden Größe und die Sollwertvorgabeeinrichtung 7 zur Vorgabe eines Sollwertes Xₛₒₗₗ für den Trossenzug. Diese sind mit der Steuer- und/oder Regelvorrichtung 10, insbesondere einer zentralen Prozesseinheit, insbesondere deren Eingängen gekoppelt. Vorzugsweise handelt es sich bei dieser um die ohnehin vorhandene Steuervorrichtung der Antriebe 3, insbesondere bei der Ausführung gemäß Figur 1 die Steuerung der Voith-Schneider-Propeller.

Über diese zentrale Prozesseinheit werden die Stellgrößen Y₃ zur Ansteuerung der Antriebe 3 bei Abweichung zwischen Soll- und Istwert des Trossenzuges gebildet und die jeweiligen Stelleinrichtungen 13 dieser angesteuert.

Die über die Erfassungseinrichtung 11 bereitgestellten Größen S werden in einer hier nicht dargestellten Auswerteinrichtung bzw. innerhalb der Steuer- und/oder Regelvorrichtung 10 verarbeitet und aus diesen wird das theoretische Änderungsverhalten des Istwertes Xᵢₛₜ(t) des Trossenzuges über die Zeit abgeleitet und dem Soll-Istwertgleich zugeführt, so dass die Ansteuerung in Abhängigkeit des vorher ermittelten theoretischen Änderungsverhaltens erfolgt.

Figur 2b zeigt den Regelkreis. Bei diesem fungiert die Leinenkraft und damit Trossenzug als Regelgröße. Über den Soll-Istwertvergleich wird ein Steuersignal Y3 an die Antriebe 3 erzeugt. Die an diesen vorgenommene Einstellung bewirkt eine Änderung des aktuell zu erfassenden Istwertes Xᵢₛₜ der Leinenkraft und damit Angleichung an den Sollwert Xₛₒₗₗ.

In den Figuren 2a und 2b zusätzlich vorgesehen ist die vorausschauende Berücksichtigung der Einflüsse der Umgebungsbedingungen auf die Bewegung des Schleppers 1 und damit auch auf den Trossenzug.
Dazu ist die Erfassungseinrichtung 11 zur Erfassung wenigstens einer, die Bewegung des Schiffes und/oder den Trossenzug wenigsten mittelbar beeinflussenden Größe vorgesehen. Die Einrichtung 11 dient beispielsweise der Erfassung der Wellenhöhe und/oder Wellenrichtung. Die Einrichtung 11 ist ebenfalls mit der Steuer- und/oder Regelvorrichtung 10 gekoppelt. Die Auswertung dieser Größen fließt in die Bildung der Stellgröße Y3 bzw. des Steuersignals für die Antriebs 3 mit ein, so dass der Istwert über die Ansteuerung der Antriebe 3 dem Sollwert wieder nachgeführt wird bzw. eine Istwertänderung durch entsprechende Ansteuerung der Antriebe 3 vermieden wird. Insbesondere werden die Stelleinrichtungen 13 zur Beeinflussung von Schubrichtung und/oder Schubkraft des einzelnen Antriebes 3 angesteuert.

D.h. das zweite Regelungskonzept wird der Grundregelung hier konkret überlagert, wobei zusätzlich aus den Größen S, welche mit der Einrichtung 11 zur Erfassung einer die Änderung des Trossenzuges bewirkenden Umgebungsbedingungen ermittelt wurden, die zeitliche Änderung Xist (t) ermittelt und dem Soll-Istwertvergleich zugeführt wird.

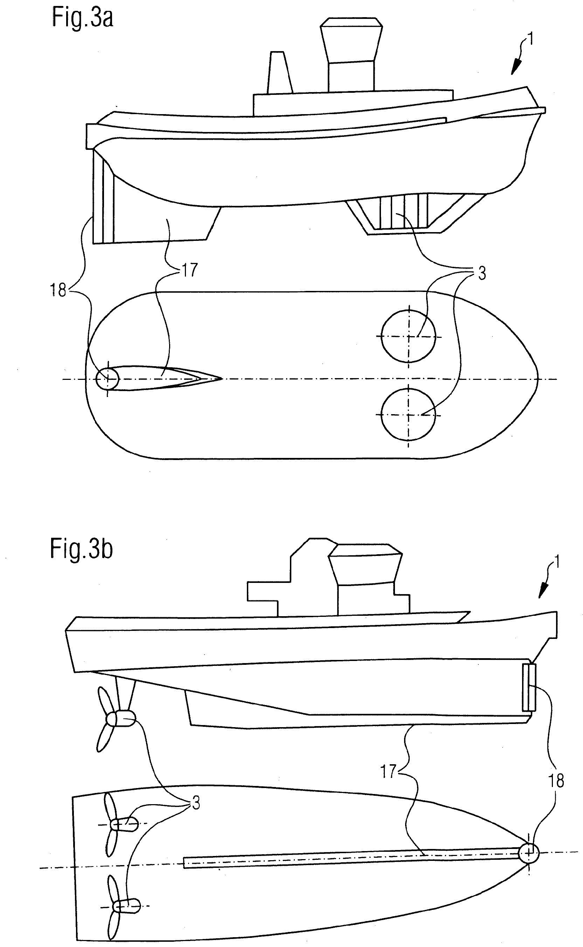

Die Figuren 3a und 3b zeigen beispielhaft zwei Ausführungen von Schleppern 1, bei welchen die erfindungsgemäße Lösung bevorzugt zur Anwendung gelangt. Die darin beschriebenen Antriebskonzepte eignen sich aufgrund deren schnellen Reaktionsfähigkeit besonders gut für das erfindungsgemäße Verfahren.

Der Schlepper 1 gemäß Figur 3a weist zwei steuerbare Antriebe 3, 3 auf. Diese befinden sich beidseits der Längsmittelebene des Schleppers 1, und zwar im Bereich von dessen einen Ende. Am entgegengesetzten Ende befindet sich eine Finne 17. Die Finne 17 ist mit einer Walze 18 versehen. Diese weist einen hier nicht dargestellten Walzenantrieb auf, um die Walze um ihre eigene Längsachse zu verdrehen.

Im vorliegenden Falle sind die beiden Schlepper-Antriebe 3 Voith-Schneider-Propeller. Stattdessen kämen auch andere Antriebsarten in Betracht.

Das in Figur 3b dargestellte Wasserfahrzeug 1 weist wiederum zwei steuerbare Antriebe 3, 3 auf. Diese sind im vorliegenden Falle als Ruderpropeller ausgeführt.

Wiederum an jenem Ende des Wasserfahrzeugs, das den Antrieben des Wasserfahrzeugs gegenüberliegt, ist eine erfindungsgemäße rotierbare Walze 18 vorgesehen. Wie man sieht, ist diese genau vertikal angeordnet.

Dieses Wasserfahrzeug weist einen starken Balkenkiel auf, an der sich die Walze 18 am angeströmten Ende befindet.

### Bezugszeichenliste

- 1: Schlepper
- 2: Transportschiff
- 3: Antrieb
- 4: Trosse
- 5: Trosseneinrichtung
- 6: Stelleinrichtung
- 7: Sollwertvorgabeeinrichtung Trossenzug
- 8: Erfassungseinrichtung
- 9: äußere Einflußfaktoren; Wellen
- 10: Steuer- und/oder Regelvorrichtung
- 11: Erfassungseinrichtung
- 12: Vergleichseinrichtung
- 13: Stelleinrichtung Antrieb
- 14: Schwenkrichtung des Schleppers
- 15: Stellgrößenbildner
- 17: Finne
- 18: Walze
- Xᵢₛₜ: Istwert
- Xₛₒₗₗ: Sollwert
- ΔX: Abweichung
- Y₃: Stellgröße
- Z: Zugverbindung
- S: Größen, erfasst mit Einrichtung 11

## Patentansprüche

1. Schlepper (1) zum Assistieren von Transportschiffen (2), umfassend die folgenden Merkmale:
1.1 der Schlepper umfasst wenigstens einen Antrieb (3);
1.2 wenigstens eine Trosse (4) zum Herstellen einer Zugverbindung (Z) zwischen einem Transportschiff (2) und dem Schlepper (1);
**gekennzeichnet durch** die folgenden Merkmale:
1.3 mit wenigstens einer Erfassungseinrichtung (8) zum Erfassen zumindest einer, den die in der Trosse bzw. Leine vorherrschende Kraft beschreibenden Trossenzug wenigstens mittelbar charakterisierenden Größe;
1.4 mit einer Steuer- oder Regelvorrichtung, die mit der Erfassungseinrichtung zum Erfassen zumindest einer den Trossenzug wenigstens mittelbar charakterisierenden Größe gekoppelt ist und die ausgelegt ist zum Bilden zumindest einer Stellgröße (Y3) zu Ansteuerung zumindest einer Stelleinrichtung (13) des wenigstens einen Antriebes (3) des Schleppers zur Beeinflussung der Schubkraft und/oder der Schubrichtung des Schleppers (1).

2. Schlepper (1) nach Anspruch 1,
**dadurch gekennzeichnet,**
**dass** die Erfassungseinrichtung (8) zur Erfassung zumindest einer den Trossenzug wenigstens mittelbar charakterisierenden Größe als eine Einrichtung zur Erfassung einer Größe aus der nachfolgenden Gruppe von Größen ausgebildet ist:
- Kraftsensor
- Drehmomentsensor
und im Bereich einer die Trosse (4) führenden Trosseneinrichtung (5) angeordnet ist.

3. Schlepper (1) nach Anspruch 1 oder 2,
**gekennzeichnet durch** folgende Merkmale:
mit einer Sollwertvorgabeeinrichtung (7) zur Vorgabe eines Sollwertes (Xₛₒₗₗ) für einen einzustellenden Trossenzug, die mit der Steuer-und/oder Regelvorrichtung (10) gekoppelt ist;
die Steuer- oder Regelvorrichtung (10) bildet oder umfasst eine Vergleichseinrichtung, ausgebildet zum Vergleich zwischen dem Sollwert (Xₛₒₗₗ) und dem Istwert (Xᵢₛₜ) und einen Stellgrößenbildner (15), ausgebildet und ausgelegt zur Bildung einer Stellgröße (Y3) zur Ansteuerung einer Stelleinrichtung (13) zur Änderung der Schubrichtung und/oder Schubkraft des einzelnen Antriebes (3).

4. Schlepper (1) nach einem der Ansprüche 1 bis 3,
**gekennzeichnet durch** folgende Merkmale:
dass der einzelne Antrieb (3) von einem Voith-Schneider-Propeller gebildet ist, vorzugsweise der Schlepper (1) zumindest zwei Antriebe (3) umfasst, die als Voith-Schneider-Propeller ausgebildet sind.

5. Schlepper (1) nach einem der Ansprüche 1 bis 4,
**gekennzeichnet durch** folgende Merkmale:
mit zumindest einer Erfassungseinrichtung (8) zur Erfassung einer, eine Änderung des Trossenzuges bewirkenden Umgebungsbedingung des Schleppers (1) beschreibende Größe, die mit der Steuer- oder Regelvorrichtung (10) gekoppelt ist.

6. Schlepper (1) nach Anspruch 5,
**dadurch gekennzeichnet,**
**dass** die zumindest eine Erfassungseinrichtung (8) zur Erfassung einer, eine Änderung des Trossenzuges bewirkenden Umgebungsbedingung des Schleppers beschreibende Größe von einer Erfassungseinrichtung (8) zur Erfassung einer die Bewegung des Schleppers (1) beschreibenden Größe oder einer Erfassungseinrichtung zur Erfassung einer die Umgebungsbedingungen des Schleppers (1) beschreibenden Größe gebildet wird.

7. Schlepper (1) nach Anspruch 5 oder 6,
**dadurch gekennzeichnet,**
**dass** die zumindest eine Erfassungseinrichtung (8) zumindest eine Einrichtung ausgewählt aus der nachfolgenden Gruppe von Einrichtungen umfasst:
- Rollwinkel-Erfassungseinrichtung
- Kurswinkel-Erfassungseinrichtung
- Kurswinkelgeschwindigkeit-Erfassungseinrichtung
- Kurswinkelbeschleunigung-Erfassungseinrichtung
- Rollwinkelbeschleunigung-Erfassungseinrichtung
- Stampfwinkel-Erfassungseinrichtung
- Stampfwinkelbeschleunigung-Erfassungseinrichtung
- Wellenhöhen-Erfassungseinrichtung
- Wellenfrequenz-Erfassungseinrichtung
- Wellenrichtung-Erfassungseinrichtung.

8. Schlepper (1) nach einem der Ansprüche 5 bis 7,
**gekennzeichnet durch** folgende Merkmale:
dass die Steuer- oder Regelvorrichtung (10) eine Auswerteinrichtung umfasst, die aus der die Bewegung des Schleppers (1) beschreibenden Größe und/oder der die Umgebungsbedingungen des Schleppers (1) beschreibenden Größe das theoretische Änderungsverhalten des Istwertes (Xᵢₛₜ(t)) des Trossenzuges über der Zeit unter dem Einfluss dieser Größen ableitet und für den Soll-Istwertvergleich bereitstellt.

9. Schlepper (1) nach einem der Ansprüche 1 bis 8,
**gekennzeichnet durch** folgende Merkmale:
dass die Steuer- oder Regelvorrichtung (10) von der Steuer- oder Regelvorrichtung zur Steuerung der Antriebe (3) gebildet wird oder in diese integriert ist.

10. Verfahren zur Regelung des Trossenzuges, insbesondere der Leinenkraft in der Zugverbindung (Z) zwischen einem Transportschiff (2) und einem Schlepper (1) zum Assistieren desselben, wobei der Schlepper (1) zumindest einen Antrieb (3), eine Trosse (4) zur Herstellung einer Zugverbindung (Z) zu dem Transportschiff (2) und eine Steuer- oder Regelvorrichtung (10) umfasst,
**dadurch gekennzeichnet,**
**dass** gemäß einem ersten Regelungskonzept ein Istwert (Xᵢₛₜ) einer den Trossenzug in der Zugverbindung (Z) wenigstens mittelbar charakterisierenden Größe erfasst und bei Überschreiten eines vordefinierten Sollwertes (Xₛₒₗₗ) und/oder Abweichung von einem vordefinierten Sollwert (Xₛₒₗₗ) der zumindest eine Antrieb (3) zur Beeinflussung der Schubkraft und/oder der Schubrichtung des Schleppers (1) angesteuert wird
oder
gemäß einem zweiten Regelungskonzept ein Istwert (Xᵢₛₜ) einer den Trossenzug in der Zugverbindung (Z) wenigstens mittelbar charakterisierenden Größe erfasst wird und eine mit zeitlichem Versatz auftretende Änderung des Istwertes (Xᵢₛₜ) ermittelt wird, wobei bei Abweichung von einem vordefinierten Sollwert (Xₛₒₗₗ) der zumindest eine Antrieb (3) zur Beeinflussung der Schubkraft und/oder der Schubrichtung des Schleppers (1) angesteuert wird.

11. Verfahren nach Anspruch 10,
**dadurch gekennzeichnet,**
**dass** das zweite Regelungskonzept dem ersten Regelungskonzept überlagert wird.

12. Verfahren nach Anspruch 10 oder 11,
**dadurch gekennzeichnet,**
**dass** der Sollwert (Xₛₒₗₗ) als zulässiger Maximalwert für die Leinenkraft oder ein vordefinierter zu erreichender Mittelwert für die Leinenkraft vorgegeben wird.

13. Verfahren nach einem der Ansprüche 10 bis 12,
**dadurch gekennzeichnet,**
**dass** zumindest eine der nachfolgend genannten Größen ermittelt wird:
- eine, die Bewegung des Schleppers (1) wenigstens mittelbar beschreibende Größe
- eine, die äußeren Umgebungsbedingungen des Schleppers (1) wenigstens mittelbar beschreibende Größe,
wobei die mit zeitlichem Versatz auftretende Änderung des Istwertes (Xᵢₛₜ(t)) als Funktion zumindest einer dieser Größen ermittelt wird oder aus dieser abgeleitet wird.

14. Verfahren nach Anspruch 13,
**dadurch gekennzeichnet,**
**dass** als eine, die Bewegung des Schleppers (1) wenigstens mittelbar beschreibende Größe wenigstens eine Größe ausgewählt aus der nachfolgenden Gruppe von Größen erfasst wird:
- Rollwinkel
- Kurswinkel
- Kurswinkelgeschwindigkeit
- Kurswinkelbeschleunigung
- Rollwinkelbeschleunigung
- Stampfwinkel
- Stampfwinkelbeschleunigung

15. Verfahren nach Anspruch 13 oder 14,
**dadurch gekennzeichnet,**
**dass** als eine, die äußeren Umgebungsbedingungen des Schleppers (1) wenigstens mittelbar beschreibende Größe wenigstens eine Größe ausgewählt aus der nachfolgenden Gruppe von Größen erfasst wird:
- Wellenhöhe
- Wellenfrequenz
- Wellenrichtung.

16. Verfahren nach einem der Ansprüche 10 bis 15,
**dadurch gekennzeichnet,**
**dass** die Erfassung des Istwertes (Xᵢₛₜ) einer den Trossenzug in der Zugverbindung (Z) wenigstens mittelbar charakterisierenden Größe durch Erfassung zumindest einer der Größen ausgewählt aus der nachfolgenden Gruppe von Größen erfolgt:
- Zugkraft beziehungsweise Leinenkraft
- Drehmoment an der Winde einer Trosseneinrichtung (5).

17. Verfahren nach einem der Ansprüche 10 bis 16,
**dadurch gekennzeichnet,**
**dass** die Erfassung zumindest einer der nachfolgenden Größen
- des Istwert (Xᵢₛₜ) einer den Trossenzug in der Zugverbindung (Z) wenigstens mittelbar charakterisierenden Größe;
- eine, die Bewegung des Schleppers (1) wenigstens mittelbar beschreibende Größe
- eine, die äußeren Umgebungsbedingungen des Schleppers (1) wenigstens mittelbar beschreibende Größe,
fortlaufend oder in vordefinierten zeitlichen Intervallen erfolgt.

## Claims

1. Tugboat (1) for assisting cargo vessels (2), comprising the following features:
1.1 the tugboat comprises at least one drive (3);
1.2 at least one tow line (4) for making a pulling connection (Z) between a cargo vessel (2) and the tugboat (1);
**characterized by** the following features:
1.3 with at least one detecting device (8) for detecting at least one variable at least indirectly characterizing the bollard pull describing the force prevailing in the tow line or the line;
1.4 with a control and/or regulating device that is coupled to the detecting device for detecting at least one variable at least indirectly characterizing the bollard pull and that is configured to form at least one control variable (Y₃) for activating at least one control device (13) of the at least one drive (3) of the tugboat for influencing the thrust force and/or the direction of thrust of the tugboat (1).

2. Tugboat (1) according to Claim 1,
**characterized in that**
the detecting device (8) for the detection of at least one variable at least indirectly characterizing the bollard pull is designed as a device for the detection of a variable from the following group of variables:
- force sensor
- torque sensor
and is disposed in the region of a cable device (5) guiding the tow line (4).

3. Tugboat (1) according to Claim 1 or 2,
**characterized by** the following features:
with a target value specification device (7) for specifying a target value (Xₛₒₗₗ) for a bollard pull that is to be set, which is coupled to the control and/or regulating device (10);
the control and/or regulating device (10) forms or comprises a comparator that is designed to compare the target value (Xₛₒₗₗ) and the actual value (Xᵢₛₜ) and a control variable generator (15) that is designed and configured to generate a control variable (Y₃) for activating a control device (13) for changing the direction of thrust and/or thrust force of the individual drive (3).

4. Tugboat (1) according to any one of Claims 1 to 3,
**characterized by** the following features:
that the individual drive (3) is in the form of a Voith-Schneider propeller, and the tugboat (1) preferably comprises at least two drives (3) in the form of Voith-Schneider propellers.

5. Tugboat (1) according to any one of Claims 1 to 4,
**characterized by** the following features:
with at least one detecting device (8) for the detection of a variable describing a change of the ambient condition of the tugboat (1) causing the bollard pull, which is coupled to the control and/or regulating device (10).

6. Tugboat (1) according to Claim 5,
**characterized in that**
the at least one detecting device (8) for the detection of a variable describing an ambient condition of the tugboat causing a change of the bollard pull is in the form of a detecting device (8) for the detection of a variable describing the motion of the tugboat (1) or a detecting device for the detection of a variable describing the ambient conditions of the tugboat (1).

7. Tugboat (1) according to Claim 5 or 6, **characterized in that**
the at least one detecting device (8) comprises at least one device selected from the following group of devices:
- roll angle detecting device
- course angle detecting device
- course angle rate of change detecting device
- course angle acceleration detecting device
- roll angle acceleration detecting device
- pitch angle detecting device
- pitch angle acceleration detecting device
- wave height detecting device
- wave frequency detecting device
- wave direction detecting device.

8. Tugboat (1) according to any one of Claims 5 to 7,
**characterized by** the following features:
that the control and/or regulating device (10) comprises an analyzer that derives the theoretical changing behavior of the actual value (Xᵢₛₜ(t)) of the bollard pull against time from the variables describing the motion of the tugboat (1) and/or the variables describing the ambient conditions of the tugboat (1) under the influence of said variables and provides said theoretical changing behavior of the actual value (Xᵢₛₜ(t)) of the bollard pull against time to the target-actual value comparison.

9. Tugboat (1) according to any one of Claims 1 to 8,
**characterized by** the following features:
that the control and/or regulating device (10) is formed by the control and/or regulating device for the control of the drives (3) or is integrated therein.

10. Method for the regulation of the bollard pull, in particular the line force in the pulling connection (Z), between a cargo vessel (2) and a tugboat (1) for assisting the same, wherein the tugboat (1) comprises at least one drive (3), a tow line (4) for making a pulling connection (Z) to the cargo vessel (2) and a control and/or regulating device (10),
**characterized in that**
according to a first regulation concept, an actual value (Xᵢₛₜ) of a variable at least indirectly characterizing the bollard pull in the pulling connection (Z) is detected and, on exceeding a predefined target value (Xₛₒₗₗ) and/or a deviation from a predefined target value (Xₛₒₗₗ), the at least one drive (3) for influencing the thrust force and/or the direction of thrust of the tugboat (1) is activated,
or
according to a second regulation concept an actual value (Xᵢₛₜ) of a variable at least indirectly characterizing the bollard pull in the pulling connection (Z) is detected and a change of the actual value (Xᵢₛₜ) occurring with a time lag is determined, wherein in the event of a deviation from a predefined target value (Xₛₒₗₗ), the at least one drive (3) for influencing the thrust force and/or the direction of thrust of the tugboat (1) is activated.

11. Method according to Claim 10,
**characterized in that**
the second regulation concept is overlaid on the first regulation concept.

12. Method according to Claim 10 or 11,
**characterized in that**
that the target value (Xₛₒₗₗ) is predetermined as a permissible maximum value for the line force or a predefined average value that is to be achieved for the line force.

13. Method according to any one of Claims 10 to 12,
**characterized in that**
at least one of the variables mentioned below is determined:
- a variable at least indirectly describing the motion of the tugboat (1),
- a variable at least indirectly describing the external ambient conditions of the tugboat (1),
wherein the change of the actual value (Xᵢₛₜ(t)) occurring with a time lag is determined as a function of at least one of said variables or is derived therefrom.

14. Method according to Claim 13,
**characterized in that**
at least one variable selected from the following group of variables as a variable at least indirectly describing the motion of the tugboat (1) is detected:
- roll angle
- course angle
- course angle rate of change
- course angle acceleration
- roll angle acceleration
- pitch angle
- pitch angle acceleration

15. Method according to Claim 13 or 14,
**characterized in that**
at least one variable selected from the following group of variables as a variable at least indirectly describing the external ambient conditions of the tugboat (1) is detected:
- wave height
- wave frequency
- wave direction.

16. Method according to any one of Claims 10 to 15,
**characterized in that**
the detection of the actual value (Xᵢₛₜ) of a variable at least indirectly characterizing the bollard pull in the pulling connection (Z) is carried out by detecting at least one of the variables selected from the following group of variables:
- pulling force or line force
- torque on the winch of a cable device (5).

17. Method according to any one of Claims 10 to 16,
**characterized in that**
the detection of at least one of the following variables
- the actual value (Xᵢₛₜ) of a variable at least indirectly characterizing the bollard pull in the pulling connection (Z);
- a variable at least indirectly describing the motion of the tugboat (1),
- a variable at least indirectly describing the external ambient conditions of the tugboat (1) is carried out continuously or at predefined time intervals.

## Revendications

1. Remorqueur (1) d'assistance de navires de transport (2), présentant les éléments caractéristiques suivants :
1.1 le remorqueur comprend au moins un entraînement (3) ;
1.2 au moins un câble de remorquage (4) servant à établir une liaison de traction (Z) entre un navire de transport (2) et le remorqueur (1) ;
**caractérisé par** les éléments caractéristiques suivants :
1.3 il comporte au moins un dispositif de détection (8) servant à détecter au moins une grandeur caractérisant au moins indirectement la traction du câble de remorquage décrivant la force s'exerçant sur le câble de remorquage ou la ligne ;
1.4 il comporte un dispositif de commande ou de régulation qui est couplé au dispositif de détection servant à détecter au moins une grandeur caractérisant au moins indirectement la traction du câble de remorquage et qui est conçu pour établir au moins une grandeur de réglage (Y3) afin de commander au moins un dispositif de commande (13) dudit au moins un entraînement (3) du remorqueur de manière à agir sur la force de poussée et/ou sur la direction de poussée du remorqueur (1).

2. Remorqueur (1) selon la revendication 1, **caractérisé en ce que** le dispositif de détection (8) servant à détecter au moins une grandeur caractérisant au moins indirectement la traction du câble de remorquage est réalisé sous la forme d'un dispositif servant à détecter une grandeur parmi le groupe de grandeurs suivant :
- capteur de force,
- capteur de couple,
et **en ce qu'**il est disposé dans la région d'un dispositif de câble de remorquage (5) guidant le câble de remorquage (4) .

3. Remorqueur (1) selon la revendication 1 ou 2, **caractérisé par** les éléments caractéristiques suivantes :
il comporte un dispositif de préréglage de valeur de consigne (7) servant à prérégler une valeur de consigne (Xₛₒₗₗ) pour une traction de câble de remorquage à régler, qui est couplé au dispositif de commande et/ou de régulation (10) ;
le dispositif de commande ou de régulation (10) constitue ou comprend un dispositif de comparaison, conçu pour comparer la valeur de consigne (Xₛₒₗₗ) et la valeur réelle
(Xᵢₛₜ) et un générateur de grandeurs de réglage (15), réalisé et conçu pour établir une grandeur de réglage (Y3) servant à commander un dispositif de réglage (13) afin de faire varier la direction de poussée ou la force de poussée de l'entraînement individuel (3).

4. Remorqueur (1) selon l'une quelconque des revendications 1 à 3,
**caractérisé par** les éléments caractéristiques suivants :
l'entraînement individuel (3) est constitué par une hélice Voith-Schneider, le remorqueur (1) comprenant de préférence au moins deux entraînements (3) qui sont réalisés sous la forme d'hélices Voith-Schneider.

5. Remorqueur (1) selon l'une quelconque des revendications des revendications 1 à 4,
**caractérisé par** les éléments caractéristiques suivantes :
il comporte au moins un dispositif de détection (8) servant à détecter une grandeur décrivant une condition d'environnement du remorqueur (1) provoquant une variation de la traction du câble de remorquage et qui est couplé au dispositif de commande ou de régulation (10) .

6. Remorqueur (1) selon la revendication 5, **caractérisé en ce que** la grandeur décrivant ledit au moins un dispositif de détection (8) servant à détecter une condition d'environnement du remorqueur provoquant une variation de la traction du câble de remorquage est constituée par un dispositif de détection (8) servant à détecter une grandeur décrivant le mouvement du remorqueur (1) ou par un dispositif de détection servant à détecter une grandeur décrivant les conditions d'environnement du remorqueur (1).

7. Remorqueur (1) selon la revendication 5 ou 6, **caractérisé en ce que** ledit au moins un dispositif de détection (8) comprend au moins un dispositif choisi dans le groupe de dispositifs suivant :
- un dispositif de détection de l'angle de roulis
- un dispositif de détection de l'angle de cap
- un dispositif de détection de la vitesse de l'angle de cap
- un dispositif de détection de l'accélération de l'angle de cap
- un dispositif de détection de l'accélération de l'angle de roulis
- un dispositif de détection de l'angle de tangage
- un dispositif de détection de l'accélération de l'angle de tangage
- un dispositif de détection de la hauteur des vagues
- un dispositif de détection de la fréquence des vagues
- un dispositif de détection de la direction des vagues.

8. Remorqueur (1) selon l'une quelconque des revendications 5 à 7,
**caractérisé par** les éléments caractéristiques suivants :
le fait que le dispositif de commande ou de régulation (10) comprend un dispositif d'évaluation qui déduit le comportement de variation théorique dans le temps de la valeur réelle (Xᵢₛₜ(t)) de la traction du câble de remorquage sous l'influence desdites grandeurs à partir de la grandeur décrivant le mouvement du remorqueur (1) et/ou de la grandeur décrivant les conditions d'environnement du remorqueur (1) et le rend disponible pour la comparaison entre valeur de consigne et valeur réelle.

9. Remorqueur (1) selon l'une quelconque des revendications 1 à 8,
**caractérisé par** les éléments caractéristiques suivants :
le dispositif de commande ou de régulation (10) est constitué par le dispositif de commande ou de régulation servant à commander les entraînements (3) ou y est intégré.

10. Procédé de régulation de la traction d'un câble de remorquage, en particulier de la force de ligne dans la liaison de traction (Z) entre un navire de transport (2) et un remorqueur (1) servant à assister ce dernier, dans lequel le remorqueur (1) comprend au moins un entraînement (3), un câble de remorquage (4) servant à établir une liaison de traction (Z) avec le navire de transport (2) et un dispositif de commande ou de régulation (10),
**caractérisé en ce que**, conformément à un premier concept de régulation, une valeur réelle (Xᵢₛₜ) d'une grandeur caractérisant au moins indirectement la traction du câble de remorquage dans la liaison de traction (Z) est détectée et lorsqu'une valeur de consigne prédéfinie (Xₛₒₗₗ) est dépassée et/ou lorsqu'un écart par rapport à une valeur de consigne prédéfinie (Xₛₒₗₗ) est détecté, ledit au moins un entraînement (3) est commandé de manière à agir sur la force de poussée et/ou sur la direction de poussée du remorqueur (1) ou, conformément à un deuxième concept de commande, une valeur réelle (Xᵢₛₜ) d'une grandeur caractérisant au moins indirectement la traction du câble dans la liaison de traction (Z) est détectée et une variation de la valeur réelle (Xᵢₛₜ) se produisant avec un certain décalage temporel est déterminée, dans lequel, en cas d'écart par rapport à une valeur de consigne prédéfinie (Xₛₒₗₗ), ledit au moins un entraînement (3) est commandé de manière à agir sur la force de poussée et/ou sur la direction de poussée du remorqueur (1).

11. Procédé selon la revendication 10,
**caractérisé en ce que** le deuxième concept de commande se superpose au premier concept de commande.

12. Procédé selon la revendication 10 ou 11,
**caractérisé en ce que** la valeur de consigne (Xₛₒₗₗ) est prédéfinie comme étant la valeur maximale admissible pour la force de ligne ou comme étant une valeur moyenne prédéfinie devant être atteinte pour la force de ligne.

13. Procédé selon l'une des revendications 10 à 12,
**caractérisé en ce qu'**au moins l'une des grandeurs suivantes est déterminée :
- une grandeur décrivant au moins indirectement le mouvement du remorqueur (1)
- une grandeur décrivant au moins indirectement les conditions ambiantes extérieures du remorqueur (1),
dans lequel la variation de la valeur réelle (Xᵢₛₜ(t)) se produisant avec un décalage temporel est déterminée en fonction d'au moins l'une desdites grandeurs ou en est déduite.

14. Procédé selon la revendication 13,
**caractérisé en ce qu'**au moins une grandeur choisie dans le groupe de grandeurs suivant est détectée comme étant une grandeur décrivant au moins indirectement le mouvement du remorqueur (1) :
- l'angle de roulis
- l'angle de cap
- la vitesse de l'angle de cap
- l'accélération de l'angle de cap
- l'accélération de l'angle de roulis
- l'angle de tangage
- l'accélération de l'angle de tangage.

15. Procédé selon la revendication 13 ou 14,
**caractérisé en ce qu'**au moins une grandeur choisie dans le groupe de grandeurs suivant est détectée comme étant une grandeur décrivant au moins indirectement les conditions d'environnement externes du remorqueur (1) :
- la hauteur des vagues
- la fréquence des vagues
- la direction des vagues.

16. Procédé selon l'une quelconque des revendications 10 à 15,
**caractérisé en ce que** la valeur réelle (Xᵢₛₜ) d'une grandeur caractérisant au moins indirectement la traction du câble de remorquage dans la liaison de traction (Z) est détectée en détectant au moins l'une des grandeurs sélectionnées dans le groupe de grandeurs suivant :
- la force de traction ou la force de ligne
- le couple appliqué au treuil d'un dispositif de câble de remorquage (5).

17. Procédé selon l'une quelconque des revendications 10 à 16,
**caractérisé en ce que** la détection d'au moins l'une des grandeurs suivantes :
- la valeur réelle (Xᵢₛₜ) d'une grandeur caractérisant au moins indirectement la traction dans la liaison de traction (Z) ;
- une grandeur décrivant au moins indirectement le mouvement du remorqueur (1)
- une grandeur décrivant au moins indirectement les conditions ambiantes extérieures du remorqueur (1) est effectuée en continu ou à des intervalles de temps prédéfinis.
